# EUROPEAN PATENT APPLICATION

(11) **EP 2 088 516 A1**
(43) Date of publication of application: **12.08.2009**
(21) Application number: 09161736.5
(22) Date of filing: 03.11.2005
(51) Int. Cl.: G06F 17/24, G06Q 10/00

(54) **Method and system for generating template replies to electronic mail messages**

(62) Divisional of application: 05110319.0
(71) Applicant: Research In Motion Limited, Waterloo, Ontario N2L 3W8 (CA)
(72) Inventor: Vander Veen, Raymond, Waterloo Ontario N2V 2M6 (CA); Adams, Neil, Waterloo Ontario N2K 4E4 (CA)
(74) Representative: Rickard, David John

(57) **Abstract**

A method for responding to an electronic mail ("email") message presented to a user on a display screen of a data processing system, comprising: receiving a command from the user to generate a reply to the email message using content from one or more template replies, the reply having a subject line and a body; presenting a choice of the one or more template replies to the user; receiving a command to select a template reply from the choice, the template reply having a subject line and a body; and generating the reply by inserting content from the body of the template reply into the body of the reply.

## Description

This application relates to the field of electronic mail ("email") messages, and more specifically, to generating template replies for email messages received by wireless and other devices.

Current wireless mobile communication devices include microprocessors, memory, soundcards, and run one or more software applications. Examples of software applications used in these wireless devices include micro-browsers, address books, email clients, instant messaging ("IM") clients, and wavetable instruments. Additionally, wireless devices have access to a plurality of services via the Internet. A wireless device may, for example, be used to browse web sites on the Internet, to transmit and receive graphics, and to execute streaming audio and/or video applications. The transfer of Internet content to and from wireless device is typically facilitated by the Wireless Application Protocol ("WAP"), which integrates the Internet and other networks with wireless network platforms.

With respect to email messages, a message may contain a common or frequently asked question ("FAQ"). When a second user receives a FAQ from a first user via email, the second user will typically have to enter a standard response that has been entered in response to the same FAQ many times previously. This can be a time consuming and frustrating process for the second user especially if the FAQ has been posed by several users or if the standard reply to the FAQ is a long one or requires research to find the answer. Examples of FAQs include the following: "Is there a list of backdoors on the device? If so where is it located?"; "Why does your email message show up as having an invalid certificate?"; and "How can I load SMIME onto my device?"

One solution for the second user is to establish a FAQ web page or site that contains a list of FAQs and responses. The second user may then provide a link to the first user to direct the first user to the FAQ web page. However, there are several problems with this solution. First, some users consider that responding to an email with a link to a FAQ web page is not very tactful as it implies a sentiment which may be expressed as follows: "You are the 100th person to email this question to me and I can't be bothered to respond to it anymore". Second, users still have to remember the FAQ web page link. Third, the information for the FAQ web page has to be stored in a convenient location where both internal and external users can have access to it. However, it is time consuming to find and maintain a location where this information can be stored. A user's company could create a common location and easy to use web interface for updating the FAQ information, but this would simply shift the burden to the company rather than actually saving time. In addition, it can be time consuming for users to input and retrieve information from a company run site.

Therefore, one shortcoming of present wireless and other devices is their inability to effectively generate responses to FAQs received by email. Furthermore, the need to effectively generate responses to FAQs is increasing in importance with the increase in the number of email related applications being run on wireless and other devices.

WENG ET AL: "Using text classification and multiple concepts to answer e-mails" EXPERT SYSTEMS WITH APPLICATIONS, OXFORD, GB, vol. 26, no. 4, May 2004 (2004-05), pages 529-543, XP005084045 ISSN: 0957-4174 discloses that in text mining, the applications domain of text classification techniques is very broad to include text filtering, word identification, and web page classification, etc. Through text classification techniques, documents can be placed into previously defined classifications in order to save on time costs especially when manual document search methods are employed. This research uses text classification techniques applied to e-mail reply template suggestions in order to lower the burden of customer service personnel in responding to e-mails. Suggested templates allows customer service personnel, using a pre-determined number of templates, to find the needed reply template, and not waste time in searching for relevant answers from too much information available. Current text classification techniques are still single-concept based. This research hopes to use a multiple concept method to integrate the relationship between concepts and classifications which will thus allow easy text classification. Through integration of different concepts and classifications, a dynamically unified e-mail concept can recommend different appropriate reply templates. In so doing, the differences between e-mails can be definitely determined, effectively improving the accuracy of the suggested template. In addition, for e-mails with two or more questions, this research tries to come up with an appropriate reply template. Based on experimental verification, the method proposed in this research effectively proposes a template for e-mails of multiple questions.

A need therefore exists for an effective method and system for generating replies to FAQs received by email messages in wireless and other devices. Accordingly, a solution that addresses, at least in part, the above and other shortcomings is desired.

According to one aspect of the application, there is provided a method for responding to an electronic mail 'email' message presented on a display screen of a wireless device, comprising: receiving a command to generate a reply to the email message using content from one or more template replies, at least one of the template replies being previously created from content of a body of a previous reply message, the reply having a subject line and a body; presenting a choice of the one or more template replies on the display screen; receiving a command to select a template reply from the choice; and generating the reply by inserting content from the body of the selected template reply into the body of the reply.

Preferably, the method further comprises presenting a menu item for creating a template reply from content of the body of a composed reply; creating the template reply in response to the menu item being selected; and at least one of storing the created template reply on the wireless device and emailing the created template reply to another wireless device.

More preferably, in the method the template reply previously created from content of a body of a previous reply message comprises macros for at least one of a reply recipient's name, a date, a time and the wireless device owner's information, the macros being replaced by the at least one of the reply recipient's name, the date, the time and the wireless device owner's information in the reply.

According to a second aspect of the application, there is provided a wireless device for responding to an electronic mail 'email' message presented on a display screen of said wireless device, comprising: a processor coupled to memory, the display screen, and an interface to a network; means for receiving a command to generate a reply to the email message using content from one or more template replies, at least one of the template replies being previously created from content of a body of a previous reply message, the reply having a subject line and a body; means for presenting a choice of the one or more template replies on the display screen; means for receiving a command to select a template reply from the choice; and means for generating the reply by inserting content from the body of the selected template reply into the body of the reply.

Preferably the wireless device further comprises means for presenting a menu item for creating a template reply from content of the body of a composed reply; means for creating the template reply in response to the menu item being selected; and means for at least one of storing the created template reply on the wireless device and emailing the created template reply to another wireless device.

More preferably in accordance with the device, the template reply previously created from content of a body of a previous reply message comprises macros for at least one of a reply recipient's name, a date, a time and the wireless device owner's information, the macros being replaced by the at least one of the reply recipient's name, the date, the time and the wireless device owner's information in the reply.

According to a third aspect of the application, there is provided a computer program product for directing a wireless device to respond to an electronic mail 'email' message presented on a display screen of said wireless device, the computer program product comprising a computer readable medium tangibly embodying computer executable code for implementing a method in accordance with the first aspect.

According to a fourth aspect of the application, there is provided a communication system comprising a plurality of wireless devices in accordance with the second aspect and at least one data processing system.

According to another aspect of the application, there is provided a method for responding to an electronic mail ("email") message presented to a user on a display screen of a data processing system, comprising: receiving a command from the user to generate a reply to the email message using content from one or more template replies, the reply having a subject line and a body; presenting a choice of the one or more template replies to the user; receiving a command to select a template reply from the choice, the template reply having a subject line and a body; and generating the reply by inserting content from the body of the template reply into the body of the reply.

Preferably, the generating further comprises: if the subject line of the template reply is not empty, inserting content from the subject line of the template reply into the subject line of the reply. Preferably, the method further includes presenting at least one of a menu item and a button icon on the display screen for selecting by the user to initiate the command to generate the reply. Preferably, the method further includes presenting the reply on the display screen for at least one of review by the user, editing, and sending. Preferably, the method further includes receiving a command from the user to modify the reply by inserting content from a body of a second template reply at a location in the body of the reply selected by the user, the second template reply selected by the user from the choice of the one or more template replies. Preferably, the method further includes receiving a command from the user to at least one of edit, view, delete, and send a copy of one or more of the template replies. Preferably, the method further includes receiving a command from the user to at least one of: add a new template reply to the one or more template replies having content newly entered by the user; add a new template reply to the one or more template replies having content copied from the reply; and add a new template reply to the one or more template replies having content copied from a sent reply. Preferably, the one or more template replies comprises one or more macros. Preferably, the email message is one of a short message system ("SMS") message and a peer-to-peer message. Preferably, the data processing system is a wireless device having a clickable thumbwheel. Preferably, the method further includes opening the email message on the display screen when the email message is selected from a list of email messages by the user with the clickable thumbwheel.

In accordance with further aspects of the present application there is provided an apparatus such as a data processing system or wireless device, a method for adapting this system or device, as well as articles of manufacture such as a computer readable medium having program instructions recorded thereon for practising the method of the application.

### BRIEF DESCRIPTION OF THE DRAWINGS

Further features and advantages of the embodiments of the present application will become apparent from the following detailed description, taken in combination with the appended drawings, in which:

FIG. 1 is a block diagram illustrating a data processing system adapted for implementing an embodiment of the application;

FIG. 2 is a block diagram illustrating a wireless device and a wireless communications system adapted for implementing an embodiment of the application;

FIG. 3 is a block diagram illustrating a memory of the wireless device of FIG. 2;

FIG. 4 is a partial screen capture illustrating the content of an exemplary opened email message;

FIG. 5 is a partial screen capture illustrating a graphical user interface ("GUI") element for generating a reply message to the email message of FIG. 4 using a template reply in accordance with an embodiment of the application;

FIG. 6 is a partial screen capture illustrating a reply message to the email message of FIG. 4 generated using a template reply in accordance with an embodiment of the application;

FIG. 7 is a partial screen capture illustrating a graphical user interface ("GUI") or screen for maintaining template replies for responding to email messages in accordance with an embodiment of the application;

FIG. 8 is a partial screen capture illustrating the content of an exemplary template reply in accordance with an embodiment of the application; and

FIG. 9 is a flow chart illustrating operations of modules for responding to an electronic mail ("email") message presented to a user on a display screen of a data processing system in accordance with an embodiment of the application.

It will be noted that throughout the appended drawings, like features are identified by like reference numerals.

### DESCRIPTION OF PREFERRED EMBODIMENTS

The following detailed description of the embodiments of the present application does not limit the implementation of the application to any particular computer programming language. The present application may be implemented in any computer programming language provided that the operating system ("OS") provides the facilities that may support the requirements of the present application. A preferred embodiment is implemented in the Java™ computer programming language (or other computer programming languages such as C or C++). (Java and all Java-based trademarks are the trademarks of Sun Microsystems Corporation.) Any limitations presented would be a result of a particular type of operating system or computer programming language and would not be a limitation of the present application.

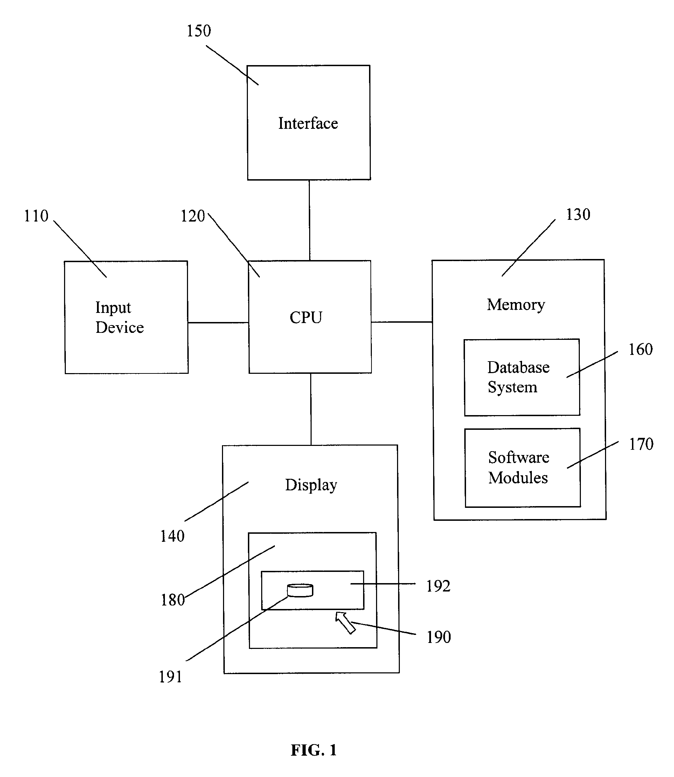

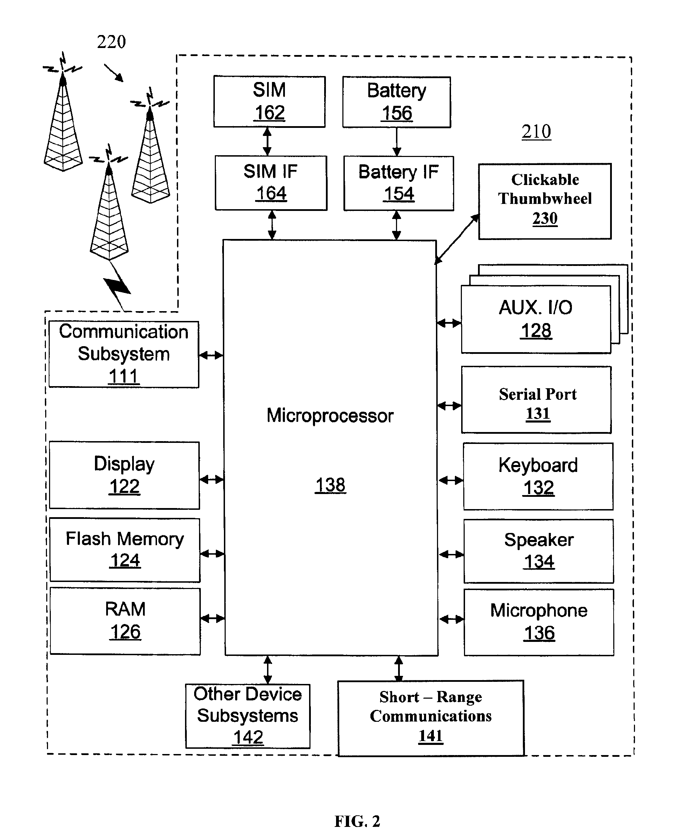

FIG. 1 is a block diagram illustrating a data processing system **100** adapted for implementing an embodiment of the application. The data processing system **100** includes an input device **110,** a central processing unit or CPU **120,** memory **130,** a display **140,** and an interface **150.** The input device **110** may include a keyboard, mouse, trackball, remote control, or similar device. The CPU **120** may include dedicated coprocessors and memory devices. The memory **130** may include RAM, ROM, or disk devices. The display **140** may include a computer screen, terminal device, or a hardcopy producing output device such as a printer or plotter. And, the interface **150** may include a network connection including an Internet connection and a wireless network **220** connection (see FIG. 2). The data processing system **100** is adapted for communicating with wireless devices **210** over a wireless network **220.**

The data processing system **100** may be a server system or a personal computer ("PC") system. The CPU **120** of the system **100** is operatively coupled to memory **130** which stores an operating system (not shown), such as IBM Corporation's OS/2™, UNIX, etc., for general management of the system **100.** The interface **150** may be used for communicating to external data processing systems (not shown) through a network (such as the Internet) or wireless network **220** (see FIG. 2). Examples of suitable platforms for the system **100** include iSeries™ servers and ThinkCentre™ personal computers available from IBM Corporation. The system **100** may include application server software (not shown), such as WebLogic® Server available from BEA Systems, Inc., for developing and managing distributed applications.

The data processing system **100** may include a database system **160** for storing and accessing programming information. The database system **160** may include a database management system ("DBMS") and a database and is stored in the memory **130** of the data processing system **100.**

The data processing system **100** includes computer executable programmed instructions for directing the system **100** to implement the embodiments of the present application. The programmed instructions may be embodied in one or more software modules **170** resident in the memory **130** of the data processing system **100.** Alternatively, the programmed instructions may be embodied on a computer readable medium (such as a CD disk or floppy disk) which may be used for transporting the programmed instructions to the memory **130** of the data processing system **100.** Alternatively, the programmed instructions may be embedded in a computer-readable, signal-bearing medium that is uploaded to a network by a vendor or supplier of the programmed instructions, and this signal-bearing medium may be downloaded through the interface **150** to the data processing system **100** from the network by end users or potential buyers.

The CPU **120** of the system **100** is typically coupled to one or more devices **110** for receiving user commands or queries and for displaying the results of these commands or queries to the user on a display **140.** As mentioned, the memory **130** may include a variety of storage devices including internal memory and external mass storage typically arranged in a hierarchy of storage as understood to those skilled in the art.

A user may interact with the data processing system **100** and its software modules **170** using a graphical user interface ("GUI") **180.** The GUI **180** may be web-based and may be used for monitoring, managing, and accessing the data processing system **100.** GUIs are supported by common operating systems and provide a display format which enables a user to choose commands, execute application programs, manage computer files, and perform other functions by selecting pictorial representations known as icons, or items from a menu through use of an input or pointing device such as a mouse **110.** In general, a GUI is used to convey information to and receive commands from users and generally includes a variety of GUI objects or controls, including icons, toolbars, drop-down menus, text, dialog boxes, buttons, and the like. A user typically interacts with a GUI **180** presented on a display **140** by using an input or pointing device (e.g., a mouse) **110** to position a pointer or cursor **190** over an object **191** and by "clicking" on the object **191.**

Typically, a GUI based system presents application, system status, and other information to the user in "windows" appearing on the display **140.** A window **192** is a more or less rectangular area within the display **140** in which a user may view an application or a document. Such a window **192** may be open, closed, displayed full screen, reduced to an icon, increased or reduced in size, or moved to different areas of the display **140.** Multiple windows may be displayed simultaneously, such as: windows included within other windows, windows overlapping other windows, or windows tiled within the display area.

FIG. 2 is a block diagram illustrating a wireless device **210** and a wireless network **220** adapted for implementing an embodiment of the application. The wireless network **220** includes antenna, base stations, and supporting radio equipment, known to those of ordinary skill in the art, for supporting wireless communications between the wireless device **210** and the data processing system **100.** The wireless network **220** may be coupled to a wireless network gateway (not shown) and to a wide area network (not shown) to which the data processing system **100** may be coupled through its interface **150.**

The wireless device **210** is a two-way communication device having at least voice and advanced data communication capabilities, including the capability to communicate with other computer systems **100.** Depending on the functionality provided by the device **210,** it may be referred to as a data messaging device, a two-way pager, a cellular telephone with data messaging capabilities, a wireless Internet appliance, or a data communication device (with or without telephony capabilities). The device **210** may communicate with any one of a plurality of fixed transceiver stations **220** within its geographic coverage area.

The wireless device **210** will normally incorporate a communication subsystem 111, which includes a RF receiver, a RF transmitter, and associated components, such as one or more (preferably embedded or internal) antenna elements, local oscillators ("LOs"), and a processing module such as a digital signal processor ("DSP") (all not shown). As will be apparent to those skilled in the field of communications, the particular design of the communication subsystem **111** depends on the communication network **220** in which the device **210** is intended to operate.

Network access is associated with a subscriber or user of the device **210** and therefore the device **210** typically has a Subscriber Identity Module (or "SIM" card) **162** to be inserted in a SIM interface ("IF") **164** in order to operate on the network (e.g., a GSM network). The device **210** is a battery-powered device so it also includes a battery IF **154** for receiving one or more rechargeable batteries **156.** Such a battery **156** provides electrical power to most if not all electrical circuitry in the device **210,** and the battery IF **154** provides for a mechanical and electrical connection for it. The battery IF **154** is coupled to a regulator (not shown) which provides power to the circuitry of the device **210.**

The wireless device **210** includes a microprocessor **138** which controls overall operation of the device **210.** Communication functions, including at least data and voice communications, are performed through the communication subsystem **111.** The microprocessor **138** also interacts with additional device subsystems such as a display **122,** a flash memory **124** or other persistent store, a random access memory ("RAM") **126,** auxiliary input/output ("I/O") subsystems **128,** a serial port **131,** a keyboard **132,** a clickable thumbwheel **230,** a speaker **134,** a microphone **136,** a short-range communications subsystem **141,** and any other device subsystems generally designated at **142.** Some of the subsystems shown in FIG. 2 perform communication-related functions, whereas other subsystems may provide "resident" or on-device functions. Notably, some subsystems, such as the keyboard **132,** display **122,** and clickable thumbwheel **230,** for example, may be used for both communication-related functions, such as entering a text message for transmission over a communication network, and device-resident functions such as a calculator or task list. Operating system software used by the microprocessor **138** is preferably stored in a persistent store such as the flash memory **124,** which may alternatively be a read-only memory ("ROM") or similar storage element (not shown). Those skilled in the art will appreciate that the operating system, specific device applications, or parts thereof, may be temporarily loaded into a volatile store such as RAM **126.**

The microprocessor **138,** in addition to its operating system functions, preferably enables execution of software applications on the device **210.** A predetermined set of applications which control basic device operations, including at least data and voice communication applications, will normally be installed on the device **210** during its manufacture. A preferred application that may be loaded onto the device **210** may be a personal information manager ("PIM") application having the ability to organize and manage data items relating to the user such as, but not limited to, instant messaging ("IM"), email, calendar events, voice mails, appointments, and task items. Naturally, one or more memory stores are available on the device **210** and SIM **162** to facilitate storage of PIM data items and other information.

The PIM application preferably has the ability to send and receive data items via the wireless network **220.** In a preferred embodiment, PIM data items are seamlessly integrated, synchronized, and updated via the wireless network, with the wireless device user's corresponding data items stored and/or associated with a host computer system such as the data processing system **100** thereby creating a mirrored host computer on the device **210** with respect to such items. This is especially advantageous where the host computer system is the wireless device user's office computer system. Additional applications may also be loaded onto the device **210** through the network **220,** the auxiliary I/O subsystem **128,** the serial port **131,** the short-range communications subsystem **141,** or any other suitable subsystem **142,** and installed by a user in RAM **126** or preferably in a non-volatile store (not shown) for execution by the microprocessor **138.** Such flexibility in application installation increases the functionality of the device **210** and may provide enhanced on-device functions, communication-related functions, or both. For example, secure communication applications may enable electronic commerce functions and other such financial transactions to be performed using the wireless device **210.**

In a data communication mode, a received signal such as a text message, an email message, or web page download will be processed by the communication subsystem 111 and input to the microprocessor **138.** The microprocessor **138** will preferably further process the signal for output to the display **122** and/or to the auxiliary I/O device **128.** A user of the wireless device **210** may also compose data items, such as email messages, for example, using the keyboard **132** in conjunction with the display **122,** the clickable thumbwheel **230,** and possibly the auxiliary I/O device **128.** The keyboard **132** is preferably a complete alphanumeric keyboard and/or a telephone-type keypad. These composed items may be transmitted over a communication network **220** through the communication subsystem **111** or the short range communication subsystem **141.**

For voice communications, the overall operation of the wireless device **210** is substantially similar, except that the received signals would be output to the speaker **134** and signals for transmission would be generated by the microphone **136.** Alternative voice or audio I/O subsystems, such as a voice message recording subsystem, may also be implemented on the device **210.** Although voice or audio signal output is preferably accomplished primarily through the speaker **134,** the display **122** may also be used to provide, for example, an indication of the identity of a calling party, duration of a voice call, or other voice call related information.

The serial port **131** shown in FIG. 2 is normally implemented in a personal digital assistant ("PDA")-type communication device for which synchronization with a user's desktop computer is a desirable, albeit optional, component. The serial port 131 enables a user to set preferences through an external device or software application and extends the capabilities of the device **210** by providing for information or software downloads to the device **210** other than through a wireless communication network **220.** The alternate download path may, for example, be used to load an encryption key onto the device **210** through a direct and thus reliable and trusted connection to thereby provide secure device communication.

The short-range communications subsystem **141** shown in FIG. 2 is an additional optional component which provides for communication between the device **210** and different systems or devices, which need not necessarily be similar devices. For example, the subsystem **141** may include an infrared device and associated circuits and components, or a Bluetooth™ communication module to provide for communication with similarly-enabled systems and devices. (Bluetooth™ is a registered trademark of Bluetooth SIG, Inc.)

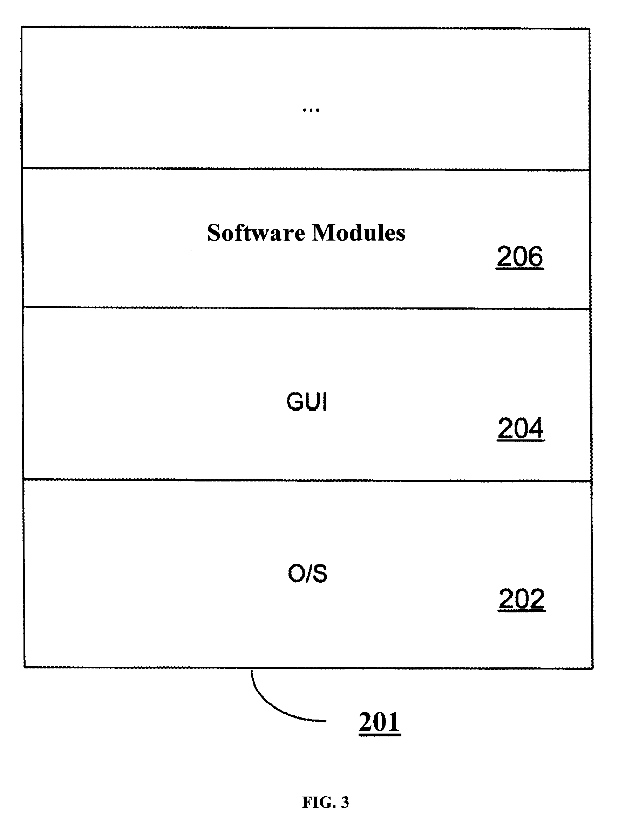

FIG. 3 is a block diagram illustrating a memory **201** of the wireless device **210** of FIG. 2. The memory **201** has various software components for controlling the device **210** and may include flash memory **124,** RAM **126,** or ROM (not shown), for example. In accordance with an embodiment of the application, the wireless device **210** is intended to be a multi-tasking wireless communications device configured for sending and receiving data items and for making and receiving voice calls. To provide a user-friendly environment to control the operation of the device **210,** an operating system ("O/S") **202** resident on the device **210** provides a basic set of operations for supporting various applications typically operable through a graphical user interface ("GUI") **204.** For example, the O/S **202** provides basic input/output system features to obtain input from the auxiliary I/O **128,** the keyboard **132,** the clickable thumbwheel **230,** and the like, and for facilitating output to the user. In accordance with an embodiment of the application, there are provided software modules **206** for creating and using template replies as will be described below. Though not shown, one or more applications for managing communications or for providing personal digital assistant like functions may also be included.

Thus, the wireless device **210** includes computer executable programmed instructions for directing the device **210** to implement the embodiments of the present application. The programmed instructions may be embodied in one or more software modules **206** resident in the memory **201** of the wireless device **210.** Alternatively, the programmed instructions may be embodied on a computer readable medium (such as a CD disk or floppy disk) which may be used for transporting the programmed instructions to the memory of the wireless device **210.** Alternatively, the programmed instructions may be embedded in a computer-readable, signal-bearing medium that is uploaded to a network by a vendor or supplier of the programmed instructions, and this signal-bearing medium may be downloaded through an interface **111, 131, 141** to the wireless device **210** from the network by end users or potential buyers.

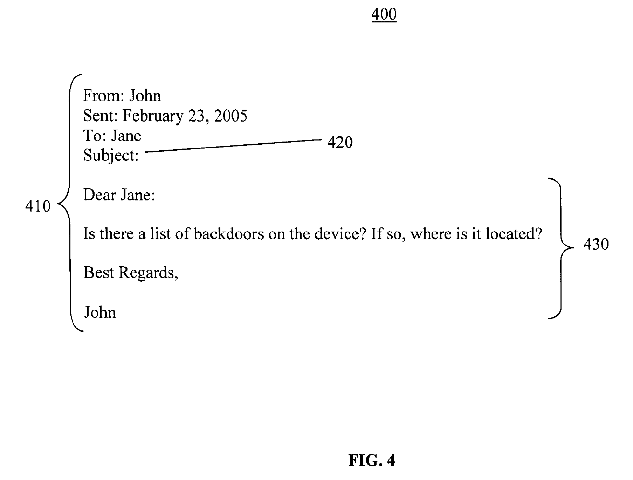

FIG. 4 is a partial screen capture illustrating the content **410** of an exemplary opened email message **400.** The email message **400** is received by a second user ("Jane") from a first user ("John") and is opened by the second user on the display screen **140, 122** of the second user's data processing system **100** or wireless device **210.** The content **410** of the email message **400** includes a subject line **420** and a body **430.** The body **430** includes a FAQ, for example, "Is there a list of backdoors on the device? If so, where is it located?"

Now, recall the problem described above. When the second user receives a FAQ **430** from a first user via email **400,** the second user will typically have to enter a standard response that has been entered in response to the same FAQ many times previously. As mentioned, this can be a time consuming and frustrating process for the second user especially if the FAQ has been posed by several users or if the standard reply to the FAQ is a long one or requires research to find the answer. In general, the present application provides means for generating template replies to FAQs in email messages **400** received by wireless **210** and other devices **100.**

According to one embodiment, the template replies are generated by a template replies application **170, 206** that is stored in the memory **130, 201** of the data processing system **100** or wireless device **210.** The template replies application may be integrated with the email application run by the data processing system **100** or wireless device **210.** With the template replies application **170, 206** a user can create and maintain a FAQ-type list of template replies which can be stored and recalled for later usage in responding to email messages, such as email messages containing FAQs.

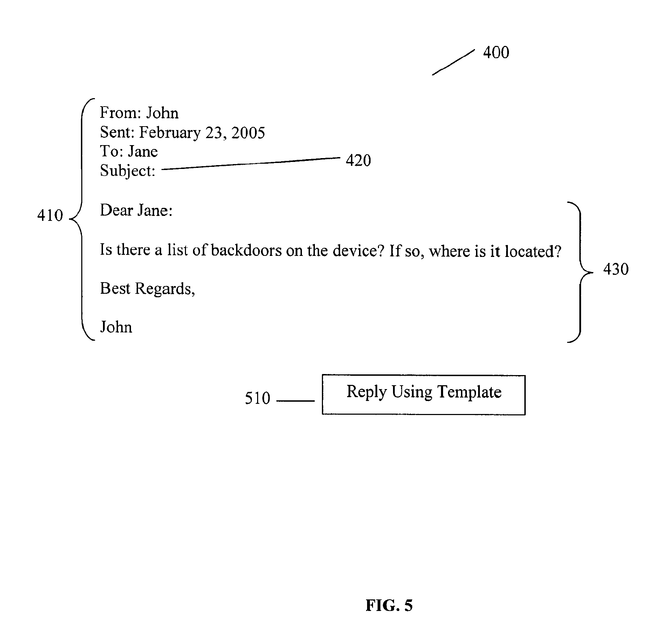

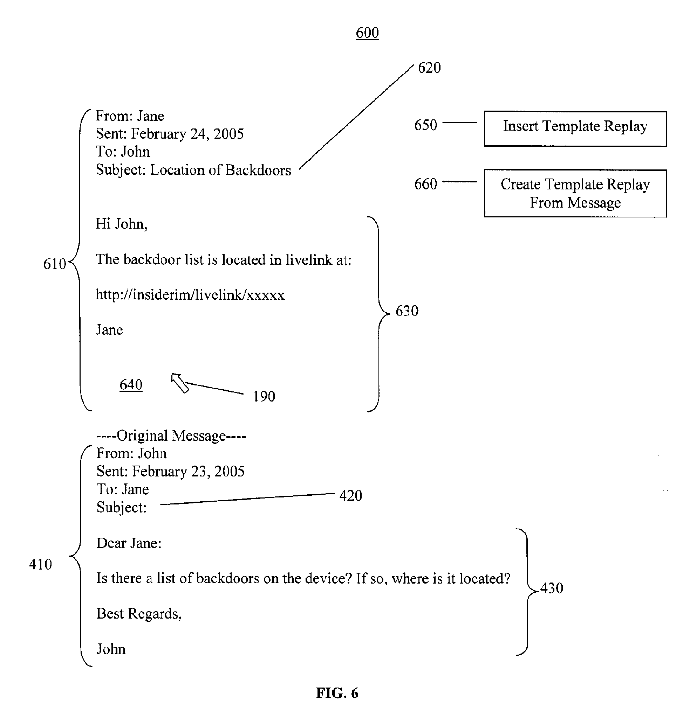

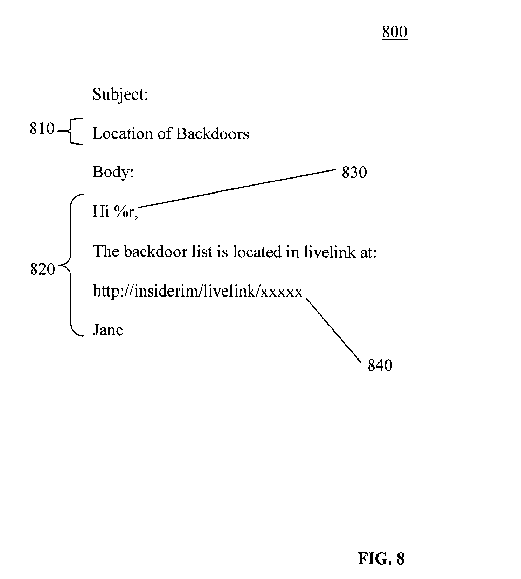

FIG. 5 is a partial screen capture illustrating a graphical user interface ("GUI") element **510** for generating a reply message (see **600** in FIG. 6) to the email message **400** of FIG. 4 using a template reply (see **800** in FIG. 8) in accordance with an embodiment of the application. The GUI element **510** is displayed on the display screen **122, 140** of the wireless device **210** or data processing system **100** and may be incorporated in the GUI **180, 204** associated with email applications **170, 206** running on the wireless device **210** or data processing system **100.** The GUI element **510** is a menu item ("Reply Using Template") **510** for generating a reply message **600** to the email message **400** using a template reply **800.** The menu item **510** may appear in a pull-down or pop-up menu (not shown). According to one embodiment, the GUI element **510** is a button that may be presented within the email message **400.**

FIG. 6 is a partial screen capture illustrating a reply message **600** to the email message **400** of FIG. 4 generated using a template reply **800** in accordance with an embodiment of the application. The content **610** of the reply message **600** includes a subject line **620,** a body **630,** and typically the content **410** of the original message **400.** As will be described in more detail below, upon a user selecting the "Reply Using Template" menu item **510,** the reply message **600** is generated by populating the subject line **620** and body **630** of the reply message **600** with content drawn from the template reply **800.**

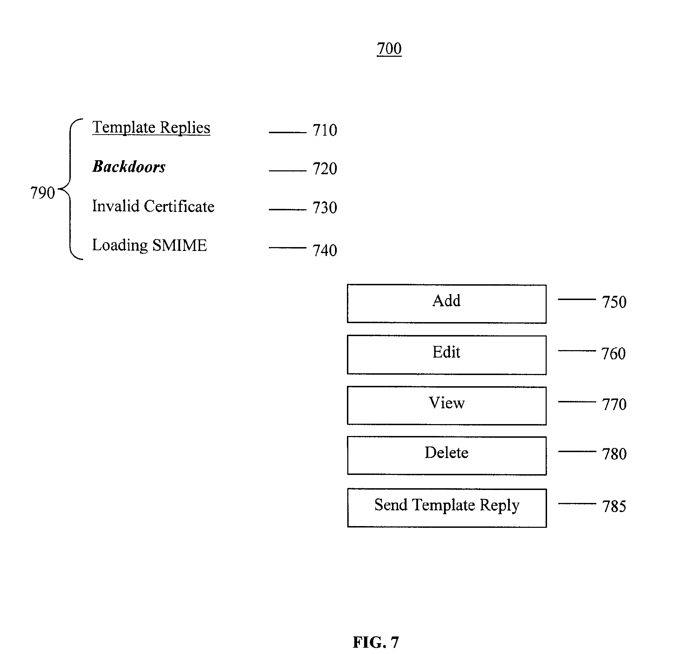

FIG. 7 is a partial screen capture illustrating a graphical user interface ("GUI") **700** or screen for maintaining template replies **800** for responding to email messages in accordance with an embodiment of the application. The GUI **700** is displayed on the display screen **122, 140** of the wireless device **210** or data processing system **100** and may be incorporated in the GUI **180, 204** associated with email applications **170, 206** running on the wireless device **210** or data processing system **100.**

The GUI **700** provides a list **790** of template reply titles (e.g., "Backdoors" **720,** "Invalid Certificate" **730,** "Loading SMIME" **740)** which may be presented under a heading **710.** In addition, the GUI **600** has menu items for adding a new template reply ("Add") **750,** editing a template reply ("Edit") **760,** viewing a template reply ("View") **770,** deleting a template reply ("Delete") **780,** and sending a template reply to other users ("Send Template Reply") **785.** The menu items **750, 760, 770, 780** may appear in a pull-down or pop-up menu (not shown). According to one embodiment, the menu items **750, 760, 770, 780, 785** are buttons that may be presented within the GUI **700.**

For example, a user may view the content of a template reply by selecting the title **720** of the template reply from the list **790** and choosing the "View" menu item **770.** In FIG. 7, template reply title "Backdoors" **720** has been selected and as such it is shown in bold italic font.

As another example, a user may send a selected template reply to one or more selected recipients by choosing the "Send Template Reply" menu item **785.**

FIG. 8 is a partial screen capture illustrating the content of an exemplary template reply **800** in accordance with an embodiment of the application. The template reply **800** shown in FIG. 8 corresponds to the template reply title "Backdoors" **720** which appears in the template reply list **790** of FIG. 7. The template reply **800** has a title **720,** a subject **810,** and a body **820.** The title **720** uniquely identifies the template reply **800** and is displayed only to the user, typically in the GUI **700.** The subject **810** is optional and when it is used its content is used for the subject line **620** of the reply message **600.** The body **820** contains the main text or content of the template reply message **800.** The content of the body **820** is inserted into the body **630** of the reply message **600** to complete that reply message.

According to one embodiment, the template reply **800** may include macros. For example if "%r" **830** is contained in the template reply body **820** it would be replaced by the recipient's name (e.g., "John") when the reply message **600** is created. Other examples of macros that could be used are include: "%d" for a date, "%t" for a time, "%o" for a wireless device owner's name, "%O" for a wireless device owner's information, "%p" for a wireless device owner's phone number, "%P" for a wireless device owner's personal identification number ("PIN"), etc.

In operation, when a user opens a message **400** on the display screen **122, 140** of the wireless device **210** or data processing system **100,** software modules **206, 170** within the wireless device **210** or data processing system **100** perform operations to initiate the template replies application and present the GUI element **510** on the display screen **122, 140** of the wireless device **210** or data processing system **100.** The GUI element **510,** typically a menu item or button, is presented to the user for providing instructions to the wireless device **210** or data processing system **100** to reply to the message **400** using a template reply **800.**

Thus, when viewing an opened email message **400,** the user can click on a menu and select the "Reply Using Template" menu item **510.** The user is then presented with a list of template replies **790** to choose from. After selecting a reply template title **720** from the list of template replies **790,** a reply message **600** is generated which has the content **410** of the original message **400** at the bottom and has the content of the template reply body **820** on top as though the user had entered the template reply text by him or herself. If the template reply **800** contains a subject **810,** then that subject **810** will form the content of the subject line **620** in the reply message **600.** The user can then add any additional text to the reply message **600** that they wish before sending it.

A template reply **800** can be used at any time to generate a reply message **600** to an email message **400.** According to one embodiment, a template reply **800** may be used to complete a reply message **600** that a user is currently composing.

Referring again to FIG. 6, when a reply message **600** is being composed by a user, an additional GUI element or menu item ("Insert Template Reply") **650** may be displayed on the display screen **122, 140** of the wireless device **210** or data processing system **100** and may be incorporated in the GUI **180, 204** associated with email applications **170, 206** running on the wireless device **210** or data processing system **100.** The menu item **650** may appear in a pull-down or pop-up menu (not shown). According to one embodiment, the menu item **650** is a button that may be presented within the reply message **600.**

The "Insert Template Reply" menu item **650** is provided for inserting the content of the body **820** of a template reply **800** into the body **630** of an open reply message **600** at a location **640** selected by the user with a pointing device **110** and cursor **190.** The inserted content may form all or a part of the body **630** of the reply message **600.** Thus, while entering body text **630** in an opened reply message **600** to the original email message **400,** the user may insert additional body text from a template reply **800.** The user can click on a menu and select the "Insert Template Reply" menu item **650.** The user is then presented with a list **790** of template replies to choose from. After choosing a template reply **800** from the list, the body **820** of the template reply **800** is inserted into the current cursor location **640** in the reply message **600** that the user is composing. The user can then enter additional text, if desired, before sending the completed reply message.

Referring again to FIG. 8, a template reply can be created by a user in several ways. First, a user can create a template reply **800** from scratch at any time. To do this, the user enters the template reply application **170, 206** (which is typically an extension of the email messaging application), the maintenance GUI **700** is presented, and the user selects the "Add" menu item **750.** A screen (not shown) having an empty template reply is then presented to the user for data entry (i.e., title, subject, body).

Second, when a message **400** is received and the user composes a reply message **600,** the user can click on a menu item ("Create Template Reply From Message") **660** for creating a template reply **800** from the content of the body **630** of the reply message **600.** The template replies application will then automatically create a template reply **800** using the content of the body **630** of the reply message **600** for the body **820** of the new template reply **800.** The user is then prompted to enter a title **720** and a subject **810** and the new template reply **800** is saved. If the user does not enter a title **720** and a subj ect **810,** then the title **720** and subj ect **810** can both default to the subj ect **620** of the reply message **600.**

Third, a template reply **800** can be created from a sent message (not shown). When the user selects a sent item from the message list of their email application, the menu item "Create Template Reply From Message" **660,** described above, can be presented for automatically creating a template reply **800** from the content of the subject and body of the sent message.

According to one embodiment, a template reply **800** can be emailed as an attachment to other users for their use in responding to FAQs.

According to another embodiment, the template reply application **170, 206** can keep track of how many times a template reply **800** is used in replies to email messages so that old or seldom used templates can be purged from the memory **130, 201** of the data processing system **100** or wireless device **210.**

According to another embodiment, the email message **400** can be a peer-to-peer message ("PIN message"). A personal identification number ("PIN") is a number that is used to identify a wireless device **210** on a wireless network **220.** Some wireless service providers allow for peer-to-peer messaging between wireless devices using PIN numbers as device addresses.

According to another embodiment, the email message **400** can be a Short Message Service ("SMS") message. Note that SMS messages are typically limited to 160 characters.

According to another embodiment, the template replies stored on the wireless device **210** are synchronized and updated via the wireless network with a host computer system such as the data processing system **100.** Advantageously, the user can be assured that any changes made to the template replies on the data processing system **100** are reflected on the wireless device **210** and vice versa.

Advantageously, by using template replies users can save time and avoid sending tacky responses to FAQ emails.

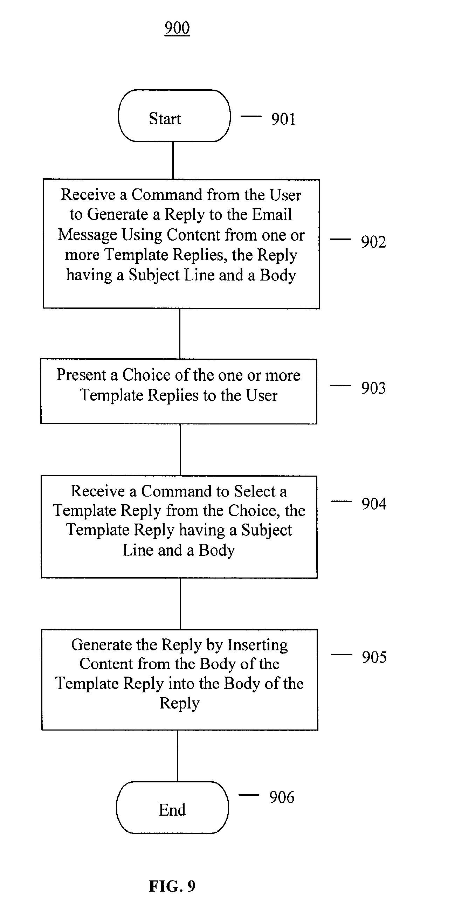

The above described method may be summarized with the aid of a flowchart. FIG. 9 is a flow chart illustrating operations **900** of modules **170** for responding to an electronic mail ("email") message **400** presented to a user on a display screen **140** of a data processing system **100** in accordance with an embodiment of the application.

At step **901,** the operations **900** start.

At step **902,** a command is received from the user to generate a reply **600** to the email message **400** using content from one or more template replies **800,** the reply having a subject line **620** and a body **630.**

At step **903,** a choice **790** of the one or more template replies **800** is presented to the user.

At step **904,** a command is received to select a template reply **800** from the choice **790,** the template reply **800** having a subject line **810** and a body **820.**

At step **905,** the reply **600** is generated by inserting content from the body **820** of the template reply **800** into the body **630** of the reply **600.**

At step **906,** the operations **900** end.

Preferably, the generating **905** further comprises: if the subject line **810** of the template reply **800** is not empty, inserting content from the subject line **810** of the template reply **800** into the subject line **620** of the reply **600.** Preferably, the method further includes presenting at least one of a menu item **510** and a button icon on the display screen **140** for selecting by the user to initiate the command to generate the reply **600.** Preferably, the method further includes presenting the reply **600** on the display screen **140** for at least one of review by the user, editing, and sending. Preferably, the method further includes receiving a command from the user to modify the reply **600** by inserting content from a body of a second template reply at a location **640** in the body **630** of the reply **600** selected by the user, the second template reply selected by the user from the choice **790** of the one or more template replies. Preferably, the method further includes receiving a command from the user to at least one of edit **760,** view **770,** delete **780,** and send a copy of **785** one or more of the template replies. Preferably, the method further includes receiving a command from the user to at least one of: add **750** a new template reply to the one or more template replies having content newly entered by the user; add **660** a new template reply to the one or more template replies having content copied from the reply **600;** and add a new template reply to the one or more template replies having content copied from a sent reply. Preferably, the email message **400** is one of a short message system ("SMS") message and a peer-to-peer message. Preferably, the data processing system **100** is a wireless device **210** having a clickable thumbwheel **230.** Preferably, the method further includes opening the email message **400** on the display screen **122, 140** when the email message **400** is selected from a list of email messages by the user with the clickable thumbwheel **230**.

The above described method for responding to email messages is generally performed by the data processing system **100.** However, according to an alternate embodiment of the application, the method can be performed by the wireless device **210.**

While this application is primarily discussed as a method, a person of ordinary skill in the art will understand that the apparatus discussed above with reference to a wireless device **210** and a data processing system **100,** may be programmed to enable the practice of the method of the application. Moreover, an article of manufacture for use with a wireless device **210** or data processing system **100,** such as a pre-recorded storage device or other similar computer readable medium including program instructions recorded thereon, may direct the wireless device **210** or data processing system **100** to facilitate the practice of the method of the application. It is understood that such apparatus and articles of manufacture also come within the scope of the application.

The embodiments of the application described above are intended to be examples only. Those of skill in the art may effect alterations, modifications and variations to the particular embodiments without departing from the scope of the application. The subject matter described herein in the recited claims intends to cover and embrace all suitable changes in technology.

A portion of the disclosure of this patent document contains material which is subject to copyright protection. The copyright owner has no objection to the reproduction by any one of the patent document or patent disclosure, as it appears in the Patent and Trademark Office patent file or records, but otherwise reserves all copyrights whatsoever.

Other aspects and advantages of the invention may be appreciated from the following numbered clauses.
1. A method for responding to an electronic mail ("email") message presented to a user on a display screen of a data processing system, comprising:
   receiving a command from the user to generate a reply to the email message using content from one or more template replies, the reply having a subject line and a body;
   presenting a choice of the one or more template replies to the user;
   receiving a command to select a template reply from the choice, the template reply having a subject line and a body; and
   generating the reply by inserting content from the body of the template reply into the body of the reply.
2. The method of clause 1, wherein the generating further comprises: if the subject line of the template reply is not empty, inserting content from the subject line of the template reply into the subject line of the reply.
3. The method of clause 1 or clause 2, further comprising presenting at least one of a menu item and a button icon on the display screen for selecting by the user to initiate the command to generate the reply.
4. The method of any one of clauses 1 to 3, further comprising presenting the reply on the display screen for at least one of review by the user, editing, and sending.
5. The method of clause 4, further comprising receiving a command from the user to modify the reply by inserting content from a body of a second template reply at a location in the body of the reply selected by the user, the second template reply selected by the user from the choice of the one or more template replies.
6. The method of any one of clauses 1 to 5, further comprising receiving a command from the user to at least one of edit, view, delete, and send a copy of one or more of the template replies.
7. The method of any one of clauses 1 to 6, further comprising receiving a command from the user to at least one of: add a new template reply to the one or more template replies having content newly entered by the user; add a new template reply to the one or more template replies having content copied from the reply; and add a new template reply to the one or more template replies having content copied from a sent reply.
8. The method of any one of clauses 1 to 7, wherein the one or more template replies comprises one or more macros.
9. The method of any one of clauses 1 to 8, wherein the email message is one of a short message system ("SMS") message and a peer-to-peer message.
10. The method of any one of clauses 1 to 9, wherein the data processing system is a wireless device having a clickable thumbwheel.
11. The method of clause 10, further comprising opening the email message on the display screen when the email message is selected from a list of email messages by the user with the clickable thumbwheel.
12. A system for responding to an electronic mail ("email") message presented to a user on a display screen, comprising:
   a processor coupled to memory, the display screen, and an interface to a network, and adapted for:
      receiving a command from the user to generate a reply to the email message using content from one or more template replies, the reply having a subject line and a body;
      presenting a choice of the one or more template replies to the user;
      receiving a command to select a template reply from the choice, the template reply having a subject line and a body; and
      generating the reply by inserting content from the body of the template reply into the body of the reply.
13. The system of clause 12, wherein the processor is further adapted to insert content from the subject line of the template reply into the subject line of the reply if the subject line of the template reply is not empty.
14. The system of clause 12 or clause 13, wherein the processor is further adapted for presenting at least one of a menu item and a button icon on the display screen for selecting by the user to initiate the command to generate the reply.
15. The system of any one of clauses 12 to 14, wherein the processor is further adapted for presenting the reply on the display screen for at least one of review by the user, editing, and sending.
16. The system of clause 15, wherein the processor is further adapted for receiving a command from the user to modify the reply by inserting content from a body of a second template reply at a location in the body of the reply selected by the user, the second template reply selected by the user from the choice of the one or more template replies.
17. The system of any one of clauses 12 to 16, wherein the processor is further adapted for receiving a command from the user to at least one of edit, view, delete, and send a copy of one or more of the template replies.
18. The system of any one of clauses 12 to 17, wherein the processor is further adapted for receiving a command from the user to at least one of: add a new template reply to the one or more template replies having content newly entered by the user; add a new template reply to the one or more template replies having content copied from the reply; and add a new template reply to the one or more template replies having content copied from a sent reply.
19. The system of any one of clauses 12 to 18, wherein the email message is one of a short message system ("SMS") message and a peer-to-peer message.
20. The system of any one of clauses 12 to 19, wherein the system is a wireless device having a clickable thumbwheel.
21. The system of clause 20, wherein the processor is further adapted for opening the email message on the display screen when the email message is selected from a list of email messages by the user with the clickable thumbwheel.
22. A computer program product for directing a data processing system to respond to an electronic mail ("email") message presented to a user on a display screen, the computer program product comprising a computer readable medium tangibly embodying computer executable code for implementing the method of any one of clauses 1 to 11.
23. A communication system comprising a plurality of wireless devices and at least one data processing system according to any one of clauses 12 to 21.

## Claims

1. A method for responding to an electronic mail 'email' message **(400)** presented on a display screen **(122)** of a wireless device (210), comprising:
receiving a command to generate a reply **(600)** to the email message **(400)** using content from one or more template replies, at least one of the template replies being previously created from content of a body of a previous reply message, the reply **(600)** having a subject line **(620)** and a body **(630);**
presenting a choice of the one or more template replies on the display screen (122);
receiving a command to select a template reply **(800)** from the choice; and
generating the reply by inserting content from the body **(820)** of the selected template reply **(800)** into the body **(630)** of the reply **(600).**

2. The method of claim 1, further comprising:
presenting a menu item for creating a template reply from content of the body of a composed reply;
creating the template reply in response to the menu item being selected; and
at least one of storing the created template reply on the wireless device and emailing the created template reply to another wireless device.

3. The method of claim 1 or claim 2, wherein the template reply previously created from content of a body of a previous reply message comprises macros for at least one of a reply recipient's name, a date, a time and the wireless device owner's information, the macros being replaced by the at least one of the reply recipient's name, the date, the time and the wireless device owner's information in the reply.

4. The method of any one of claims 1 to 3, wherein the generating further comprises: if the subject line **(810)** of the template reply **(800)** is not empty, inserting content from the subject line **(810)** of the template reply **(800)** into the subject line **(620)** of the reply **(600).**

5. The method of any one of claims 1 to 4, further comprising presenting at least one of a menu item and a button icon on the display screen **(122)** for selecting to initiate the command to generate the reply **(600).**

6. The method of any one of claims 1 to 5, further comprising presenting the reply **(600)** on the display screen **(122)** for at least one of review, editing, and sending.

7. The method of claim 6, further comprising receiving a command to modify the reply **(600)** by inserting content from a body **(820)** of a second template reply **(800)** at a location **(640)** in the body **(630)** of the reply **(600),** the second template reply **(800)** selected from the choice of the one or more template replies.

8. The method of any one of claims 1 to 7, further comprising receiving a command to at least one of edit, view, delete, and send a copy of one or more of the template replies.

9. The method of any one of claims 1 to 8, further comprising receiving a command to at least one of: add a new template reply **(800)** to the one or more template replies having content newly entered; add a new template reply **(800)** to the one or more template replies having content copied from the reply **(600);** and add a new template reply **(800)** to the one or more template replies having content copied from a sent reply.

10. The method of any one of claims 1 to 9, further comprising: tracking the usage of each template reply and purging seldom used template replies.

11. The method of any one of claims 1 to 10, further comprising: synchronizing template replies on the wireless device **(210)** with a host data process system (100) via a wireless network (220).

12. The method of any one of claims 1 to 11, wherein the email message **(400)** is one of a short message system 'SMS' message and a peer-to-peer message.

13. A wireless device (210) for responding to an electronic mail 'email' message **(400)** presented on a display screen **(122)** of said wireless device (210), comprising:
a processor **(138)** coupled to memory **(201),** the display screen **(122),** and an interface to a network **(220);** and
respective means for performing all of the method steps of any preceding claim.

14. A computer program product for directing a wireless device (210) to respond to an electronic mail 'email' message **(400)** presented on a display screen **(122)** of said wireless device (210), the computer program product comprising a computer readable medium (201) tangibly embodying computer executable code for implementing the method of any one of claims 1 to 12.

15. A communication system comprising a plurality of wireless devices **(210)** according to any one of claims 13 to 24 and at least one data processing system (100).
